# FASCICULE DE BREVET EUROPEEN

(11) **EP 4 016 054 B1**
(45) Date de publication et mention de la délivrance du brevet: **11.10.2023**
(21) Numéro de dépôt: 21212329.3
(22) Date de dépôt: 03.12.2021
(51) Int. Cl.: G01N 21/552, G01N 21/35, G01N 21/45

(54) **COMPOSANT OPTIQUE POUR UN DISPOSITIF D'IMAGERIE ATR**
OPTISCHE KOMPONENTE FÜR EINE ATR-BILDGEBUNGSVORRICHTUNG
OPTICAL COMPONENT FOR AN ATR IMAGING DEVICE

(30) Priorité: 21.12.2020 FR 2013815
(43) Date de publication de la demande: 22.06.2022
(73) Titulaire: COMMISSARIAT À L'ÉNERGIE ATOMIQUE ET AUX ÉNERGIES ALTERNATIVES, 75015 Paris (FR)
(72) Inventeur: MONPEURT, Cyrielle, 38054 Grenoble Cedex 09 (FR); DUPOY, Mathieu, 38500 Coublevie (FR)
(74) Mandataire: Brevalex

(56) Documents cités:
- WO-A1-98/22807
- TW-B- I 696 851
- US-A1- 2010 302 798
- US-A1- 2014 260 535
- US-A1- 2018 164 214
- US-A1- 2019 004 324
- NICOLETTI SERGIO ET AL: "Miniaturization of mid-IR sensors on Si: challenges and perspectives", SPIE PROCEEDINGS; [PROCEEDINGS OF SPIE ISSN 0277-786X], SPIE, US, vol. 10923, 4 mars 2019 (2019-03-04), pages 109230H-109230H, XP060117589, DOI: 10.1117/12.2506759 ISBN: 978-1-5106-3673-6

## Description

### DOMAINE TECHNIQUE

L'invention se rapporte au domaine de l'imagerie par réflexion totale atténuée, et concerne plus particulièrement un composant pour réaliser la répartition de lumière vers l'échantillon et la collecte de lumière en provenance de l'échantillon. L'imagerie par réflexion totale atténuée permet de réaliser des analyses par spectroscopie, pour déterminer des informations relatives à la composition chimique ou biologique d'un échantillon. L'analyse est basée sur le fait que chaque molécule présente un spectre d'absorption caractéristique, par exemple dans l'infrarouge. De préférence, plusieurs longueurs d'onde distinctes sont utilisées, pour améliorer la détermination de la composition de l'échantillon.

### ÉTAT DE LA TECHNIQUE ANTÉRIEURE

L'imagerie multi-spectrale par réflexion totale atténuée (ATR, pour l'anglais « *Attenuated Total Reflection* ») est une technique dans laquelle on amène de la lumière dans un composant accolé à un échantillon à analyser. La lumière est entièrement réfléchie à une interface entre le composant et l'échantillon. Une partie de la lumière infrarouge pénètre néanmoins à l'intérieur de l'échantillon, sous la forme d'une onde évanescente. Une partie de cette onde évanescente est absorbée par l'échantillon. La lumière renvoyée par l'échantillon comporte donc des informations relatives à l'absorption par l'échantillon. L'image ainsi obtenue peut être utilisée pour déterminer une répartition de compositions chimiques ou biologiques locales sur l'échantillon à analyser, en exploitant le fait que chaque composé chimique ou biologique absorbe (et déphase) certaines fréquences d'un rayonnement incident, avec une signature propre permettant une identification (identification par spectroscopie, notamment spectroscopie infrarouge).

Dans l'art antérieur, le composant accolé contre l'échantillon est constitué d'un simple prisme, transparent aux longueurs d'onde envoyées dans l'échantillon. La lumière i est injectée sur une face d'entrée du prisme, circule à l'intérieur du prisme jusqu'à une face d'échange de ce dernier, contre laquelle est accolé l'échantillon, puis repart vers une face de sortie du prisme, du côté opposé à la face d'entrée. Un tel composant est illustré dans l'article « Attenuated total reflection Fourier-transform infrared (ATR-FTIR) imaging of tissues and live cells », K. L. Andrew Chan & al., Chem Soc Rev, pp. 1850-1864. La source lumineuse utilisée est une source polychromatique, ce qui permet de faire de l'imagerie multi-spectrale. Un inconvénient est que pour chaque longueur d'onde considérée, la source polychromatique n'offre qu'une faible densité de puissance. Il est donc nécessaire, pour obtenir une image multi-spectrale, de mettre en oeuvre un balayage de l'échantillon par le faisceau lumineux. Cela se traduit par une durée très importante pour acquérir une image multi-spectrale grand champ d'un échantillon. Les documents WO 98/22807 A1, US 2014/260535 A1 et US 2018/164214 A1 décrivent différentes alternatives pour fournir une imagerie multi-spectrale par réflexion totale atténuée.

Un objectif à la base de l'invention est de proposer un moyen permettant de réduire un temps d'acquisition d'une image multi-spectrale d'un échantillon, obtenue par la technique d'imagerie multi-spectrale par réflexion totale atténuée.

### EXPOSÉ DE L'INVENTION

Cet objectif est atteint avec un composant optique pour un dispositif d'imagerie multi-spectrale par réflexion totale atténuée, qui comporte un substrat d'appui et au moins deux guides d'onde planaires, et dans lequel :
- chacun des guides d'onde planaires s'étend selon un plan respectif, avec lesdits plans respectifs parallèles entre eux et parallèles à un plan du composant optique ;
- les guides d'onde planaires et le substrat d'appui sont superposés ensemble le long d'un axe orthogonal au plan du composant optique, avec le substrat d'appui qui recouvre les guides d'onde planaires ;
- chacun des guides d'onde planaires comporte au moins un réseau de diffraction, pour extraire de la lumière hors dudit guide d'onde planaire ; et
- deux au moins des guides d'onde planaires ont leurs réseaux de diffraction respectifs qui présentent des valeurs du pas moyen de répartition des motifs distinctes l'une de l'autre.

Chaque réseau de diffraction est configuré pour extraire de la lumière hors du guide d'onde planaire correspondant, en particulier en direction du substrat d'appui.

Dans chaque guide d'onde planaire, le pas moyen de répartition des motifs dans le réseau de diffraction définit une longueur d'onde de la lumière qui est extraite, hors dudit guide d'onde, par le réseau de diffraction, et dans une direction d'extraction déterminée. Cette longueur d'onde est nommée longueur d'onde d'extraction. En pratique, la longueur d'onde d'extraction est une longueur d'onde associée à un guide d'onde planaire, que ce dernier est destiné à recevoir en circulation avant de l'envoyer vers un échantillon.

De préférence, chacun des guides d'onde planaires a son réseau de diffraction qui présente une valeur distincte du pas moyen de répartition des motifs. Chacun des guides d'onde planaires est alors associé à une valeur distincte de la longueur d'onde d'extraction, pour une même direction d'extraction considérée.

En utilisation, le composant optique est accolé contre un échantillon à analyser, au niveau d'une interface d'échange qui s'étend du côté opposé aux guides d'onde planaires. L'interface d'échange peut être constituée simplement par la face supérieure du substrat d'appui, du côté opposé aux guides d'onde planaires.

Deux au moins des guides d'onde planaires sont associés à des valeurs différentes de leur longueur d'onde d'extraction, dans une direction d'extraction considérée. Chacun de ces guides d'onde planaires est configuré guider de la lumière à la longueur d'onde d'extraction qui lui est associée. En utilisation, chacun de ces guides d'onde planaires reçoit de la lumière à la longueur d'onde d'extraction qui lui est associée, et guide cette lumière jusqu'au réseau de diffraction. Ladite lumière est de préférence de la lumière infrarouge. L'invention n'est cependant pas limitée à une utilisation avec de la lumière infrarouge, et couvre également des variantes adaptées à une utilisation avec de la lumière visible, ou de la lumière appartenant à toute autre gamme de longueurs d'onde. Au niveau du réseau de diffraction, la lumière est extraite hors du guide d'onde planaire, notamment en direction du substrat d'appui. La lumière extraite en direction du substrat d'appui se propage jusqu'à l'interface d'échange mentionnée ci-dessus, et se réfléchit sur cette interface. La lumière réfléchie inclut une onde ayant transité dans l'échantillon sous la forme d'une onde évanescente, à proximité de l'interface d'échange.

Le composant optique selon l'invention joue donc le même rôle que le prisme des systèmes décrits en introduction.

La constitution du composant optique selon l'invention, avec plusieurs guides d'onde planaires superposés, permet que chacun des guides d'onde planaires soit dédié à la réception et l'envoi d'une longueur d'onde déterminée jusqu'à l'interface d'échange. Le composant optique selon l'invention permet ainsi d'utiliser, en tant que source lumineuse, un ensemble de sources lumineuses monochromatiques envoyant chacune un faisceau lumineux respectif en entrée de l'un respectif des guides d'onde planaires. L'invention permet ainsi d'utiliser une pluralité de sources lumineuses monochromatiques, en remplacement d'une unique source lumineuse polychromatique. Cela permet de bénéficier d'une forte densité spectrale de puissance pour toutes les longueurs d'onde utilisées pour caractériser l'échantillon. Du fait de cette forte densité spectrale de puissance, il n'est plus nécessaire de concentrer la lumière sur une surface réduite. On peut donc réaliser une image multi-spectrale d'une large surface d'un échantillon, sans balayage de la lumière sur l'échantillon. Le composant optique selon l'invention permet ainsi de réduire un temps d'acquisition d'une image multi-spectrale d'un échantillon, obtenue par la technique d'imagerie multi-spectrale par réflexion totale atténuée.

La pluralité de sources lumineuses monochromatiques peut comprendre notamment un ensemble de lasers à cascade quantique (QCL, pour l'anglais « *Quantum Cascade Laser »).*

En outre, le substrat d'appui peut comporter, d'un côté opposé aux guides d'onde planaires, une face configurée pour former une interface d'échange avec un échantillon et pour être incidente à la lumière extraite des guides d'onde planaires.

De plus, une face de sortie du composant optique peut correspondre à une face latérale du substrat d'appui arrangée de manière à ce que la lumière extraite des guides d'onde planaires et réfléchie par réflexion totale dans le substrat d'appui au niveau de la face configurée pour former l'interface d'échange émerge du composant optique à travers cette face de sortie.

De préférence, chacun des guides d'onde planaires comporte une couche de coeur intercalée entre deux couches de gaine, et dans chacun des guides d'onde planaires, l'au moins un réseau de diffraction est constitué de portions fort indice et de portions bas indice, avec les portions fort indice constituées du matériau de la couche de coeur et les portions bas indice constituées du matériau des couches de gaine.

Dans chacun des guides d'onde planaires, l'au moins un réseau de diffraction peut présenter une valeur locale du facteur de remplissage qui varie de façon monotone le long d'un axe de propagation de la lumière dans ledit guide d'onde planaire et dans le sens de propagation de la lumière le long de cet axe, la valeur locale du facteur de remplissage se rapprochant ainsi progressivement de la valeur 0,5, avec le facteur de remplissage qui désigne un rapport entre une surface occupée par la portion bas indice dans un motif du réseau de diffraction et une surface totale occupée par ledit motif, lesdites surfaces étant définies dans un plan de coupe parallèle au plan du composant optique.

Avantageusement, les guides d'onde planaires sont agencés par ordre décroissant d'une valeur de longueur d'onde d'extraction associée, avec la valeur de longueur d'onde d'extraction qui diminue en même temps que diminue la distance entre le guide d'onde planaire et le substrat d'appui.

De préférence, le substrat d'appui est transparent à des valeurs de la longueur d'onde d'extraction associées aux réseaux de diffraction de chacun des guides d'onde planaires.

Avantageusement, un indice de réfraction du substrat d'appui est supérieur ou égal à 3, à une longueur d'onde maximale parmi des longueurs d'onde d'extraction associées aux réseaux de diffraction de chacun des guides d'onde planaires.

Le substrat d'appui comporte avantageusement une face de sortie, orientée transverse relativement au plan du composant optique.

De préférence, dans chacun des réseaux de diffraction, la valeur du pas moyen de répartition des motifs est adaptée pour extraire un faisceau lumineux à une valeur déterminée de longueur d'onde d'extraction, et selon un angle d'extraction défini relativement à la normale au plan du composant optique, avec une même valeur de l'angle d'extraction pour tous les réseaux de diffraction et avec ladite valeur de l'angle d'extraction, modifiée par la réfraction à l'entrée dans le substrat d'appui, qui est supérieure à un angle critique de réflexion totale interne à une interface entre le substrat d'appui et un milieu extérieur.

Ladite valeur de l'angle d'extraction, modifiée par la réfraction à l'entrée dans le substrat d'appui, peut être supérieure ou égale à 45°.

Avantageusement, le substrat d'appui comporte une face de sortie, orientée transverse relativement au plan du composant optique, avec un angle entre le plan du composant optique et ladite face de sortie, qui est sensiblement égal à la valeur de l'angle d'extraction modifiée par la réfraction à l'entrée dans le substrat d'appui, à plus ou moins 5° près.

Le composant optique selon l'invention peut comporter en outre une couche de séparation de faisceaux, superposée au substrat d'appui du côté opposé au guides d'onde planaires, transparente à des valeurs de longueur d'onde d'extraction associées aux réseaux de diffraction de chacun des guides d'onde planaires, et d'indice de réfraction distinct de celui du substrat d'appui.

L'invention couvre également un système optique, qui comporte un composant optique selon l'invention, ainsi qu'une pluralité de sources lumineuses élémentaires, où chaque source lumineuse élémentaire est couplée optiquement à l'un respectif des guides d'onde planaires et apte à émettre un faisceau lumineux monochromatique de spectre centré sur une valeur de longueur d'onde d'extraction associée audit guide d'onde planaire.

Le système optique peut comporter en outre un détecteur matriciel, sensible à des valeurs de longueur d'onde d'extraction associées aux différents guides d'onde planaire, et configurée pour recevoir de la lumière émergeant du substrat d'appui après qu'elle ait été émise par les sources lumineuses élémentaires et qu'elle ait circulé dans le composant optique.

Le système optique peut comporter en outre un calculateur, configuré pour recevoir en entrée des mesures d'intensité lumineuse fournies par le détecteur matriciel, et pour fournir en sortie une image multi-spectrale d'un échantillon.

Selon un mode de réalisation avantageux, ledit composant optique forme un premier composant optique, et le système optique comporte en outre :
- un second composant optique selon l'invention, avec le premier composant optique et le second composant optique qui sont espacés l'un de l'autre et qui ont leurs faces de sortie respectives situées face à face ; et
- un séparateur optique et deux bras de guidage, avec le séparateur optique configuré pour répartir la lumière sur chacun des deux bras de guidage, avec l'un premier des bras de guidage qui est apte à guider la lumière depuis le séparateur optique jusqu'au premier composant optique et avec l'un second des bras de guidage qui est apte à guider la lumière depuis le séparateur optique jusqu'au second composant optique ;
et dans lequel les premier et second composants optiques peuvent être configurés et positionnés de manière symétrique de sorte que, lorsqu'un échantillon destiné à être analysé est disposé sur la face configurée pour former l'interface d'échange du premier composant optique et qu'un échantillon de référence est disposé sur la face configurée pour former l'interface d'échange du deuxième composant optique, la lumière émergeant de la face de sortie du premier composant optique et la lumière émergeant de la face de sortie du deuxième composant optique puissent interférer et former une figure d'interférence pour chaque longueur d'onde dans l'espace entre les deux composants optiques de manière à pouvoir être détectée par un détecteur matriciel.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- les figures 1A et 1B illustrent de manière schématique, respectivement selon une vue en coupe dans un plan vertical et selon une vue en coupe dans un plan horizontal, un composant optique selon un premier mode réalisation de l'invention ;
- la figure 2 illustre de façon schématique le composant optique des figures 1A et 1B, en utilisation ;
- la figure 3 illustre de façon schématique un angle d'extraction de la lumière, dans le composant optique des figures 1A et 1B ;
- la figure 4 illustre de façon schématique un premier mode de réalisation d'un système optique selon l'invention, comportant le composant optique des figures 1A et 1B ;
- la figure 5 illustre de manière schématique un composant optique selon un deuxième mode réalisation de l'invention ;
- les figures 6A et 6B illustrent de manière schématique, respectivement selon une vue en coupe dans un plan vertical et selon une vue en coupe dans un plan horizontal, un système optique selon un deuxième mode réalisation de l'invention ; et
- la figure 7 illustre de façon schématique un composant optique pouvant offrir des avantages comparables aux avantages offerts par le composant optique selon l'invention.

### EXPOSÉ DÉTAILLÉ DE MODES DE RÉALISATION PARTICULIERS

Pour faciliter la lecture, on a représenté sur les figures les axes d'un repère orthonormé (Oxyz). L'axe (Oz) désigne un axe vertical. Les axes (Ox) et (Oy) définissent ensemble un plan horizontal.

Dans tout le texte, le terme « infrarouge » se rapporte à une partie du spectre lumineux appartenant à une bande spectrale allant de 0,78 µm à 50 µm, plus préférentiellement de 2 µm à 14 µm (infrarouge moyen). Dans tout le texte, le terme « visible » se rapporte à une partie du spectre lumineux appartenant à une bande spectrale allant de 0,35 µm à 0,78 µm exclu.

Dans tout le texte, un guide d'onde planaire désigne un élément de guidage optique, apte à guider la propagation de la lumière par réflexions successives sur des faces planes parallèles entre elles (ici, il s'agit plus particulièrement d'un guidage réfractif). Dans un guide d'onde planaire, la lumière est confinée selon l'un des axes de l'espace à trois dimensions, et libre de se propager selon les deux autres axes. Un guide d'onde est constitué d'un coeur, dans lequel circule la lumière, et d'une gaine, assurant une différence d'indice optique souhaitée entre le coeur et un milieu entourant le coeur. Dans le cas d'un guide d'onde planaire, une couche de coeur est intercalée entre deux couches de gaine, et la lumière est guidée dans la couche de coeur par réflexions successives aux interfaces entre la couche de coeur et chacune respective des couches de gaine.

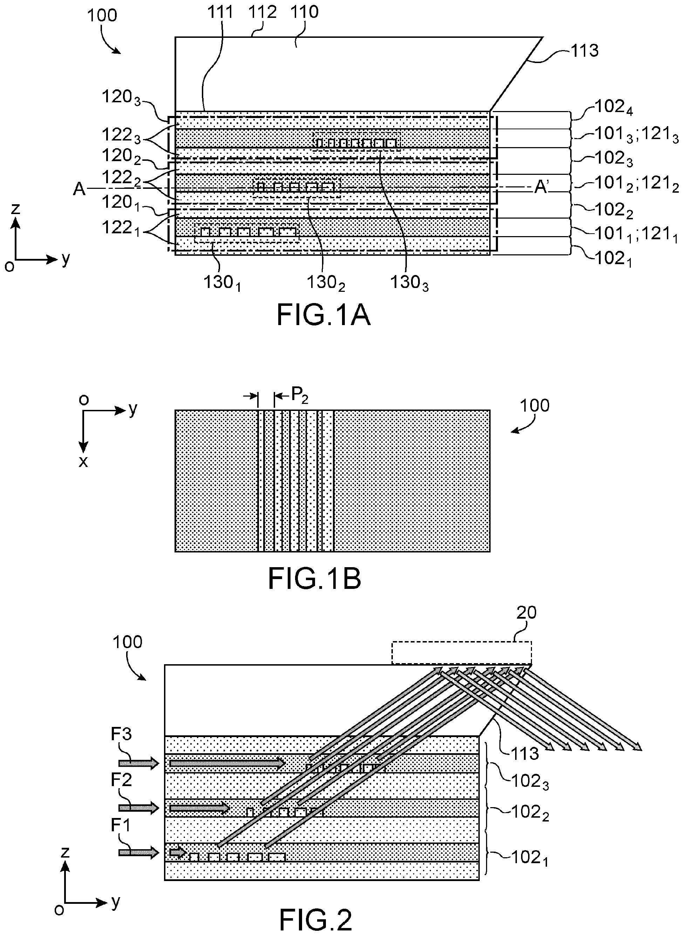

On décrit tout d'abord, en référence aux figures 1A et 1B, un premier mode de réalisation d'un composant optique 100 selon l'invention. La figure 1A illustre le composant optique 100, dans une vue en coupe selon un plan parallèle au plan (Oyz). La figure 1B illustre le composant optique 100 dans une vue en coupe selon un plan AA' parallèle au plan (Oxy).

Le composant optique 100 comporte :
- un substrat d'appui 110 ; et
- une pluralité de guides d'onde planaires 120₁, 120₂, 120₃, ici au nombre de trois.

Le substrat d'appui 110 est constitué ici d'un cristal en silicium. Il est délimité notamment par deux faces planes 111, 112 qui s'étendent parallèles au plan (Oxy), ainsi que par une face transverse 113 orientée en biais relativement au plan (Oxy) et reliant les deux faces planes 111 et 112.

Les guides d'onde planaires 120₁, 120₂, 120₃ sont formés dans un empilement constitué de couches fort indice 101₁, 101₂, 101₃ et de couches bas indice 102₁, 102₂, 102₃, 102₄ agencées en alternance.

Ici, cet empilement est constitué d'une alternance de couches bas indice en alliage germanium-silicium (avec de préférence 40% de germanium) et de couches fort indice en germanium. En variante, les couches fort indice et les couches bas indice sont toutes en alliage de silicium et de germanium, avec une plus forte teneur en germanium dans les couches fort indice. Ici, les couches fort indice et bas indice présentent chacune une composition chimique homogène, avec un indice de réfraction des couches fort indice strictement supérieur à un indice de réfraction des couches bas indice (ici aux longueurs d'onde infrarouge, par exemple à 3 µm ou à 8 µm). En variante, les couches fort indice et/ou les couches bas indice peuvent présenter une répartition non homogène de leur composition chimique et de leur indice de réfraction. Elles peuvent par exemple présenter un profil d'indice de réfraction avec un gradient. En tout état de cause, une valeur moyenne de l'indice de réfraction dans les couches bas indice est strictement inférieure à une valeur moyenne de l'indice de réfraction dans les couches fort indice.
Lesdites couches fort indice et bas indice s'étendent chacune dans des plans parallèles au plan (Oxy), et sont superposées les unes au-dessus des autres le long de l'axe (Oz). De la même manière, les guides d'onde planaires s'étendent donc chacun dans des plans parallèles au plan (Oxy), et sont superposées les uns au-dessus des autres le long de l'axe (Oz). On nomme « plan du composant optique », un plan parallèle au plan (Oxy).

Chacun des guides d'onde planaires 120₁, 120₂, 120₃ comporte une couche de coeur 121₁, 121₂, respectivement 121₃, intercalée entre deux couches de gaine 122₁, 122₂, respectivement 122₃. Chaque couche de coeur est formée par l'une respective des couches fort indice 101₁, 101₂, 101₃. Les couches de gaines sont formées chacune dans l'une des couches bas indice 102₁, 102₂, 102₃, 102₄. La couche de gaine supérieure d'un guide d'onde planaire et la couche de gaine inférieure du guide d'onde planaire situé juste au-dessus sont formées alors dans une même couche bas indice (voir couches 102₂ et 102₃). L'épaisseur de ladite couche bas indice est adaptée pour limiter des pertes par diaphonie entre les deux guides d'onde planaires voisins. Chacun des guides d'onde planaires 120₁, 120₂, 120₃ est apte à guider de la lumière à au moins une longueur d'onde déterminée, ici de la lumière infrarouge.

Le substrat d'appui 110, et l'empilement de couches comportant les guides d'onde planaires 120₁, 120₂, 120₃, sont superposés ensemble le long de l'axe (Oz). Le substrat d'appui 110 s'étend sur le dessus de l'empilement, en recouvrant les guides d'onde planaires 120₁, 120₂, 120₃. Ici, le substrat d'appui 110 est en contact physique direct avec une couche bas indice appartenant à l'empilement de couches, selon une surface parallèle au plan (Oxy).

Chacun des guides d'onde planaires comporte au moins un réseau de diffraction 130₁, 130₂, respectivement 130₃, ici un unique réseau de diffraction.

Ici, les réseaux de diffraction 130₁, 130₂, 130₃ sont formés dans la couche de coeur du guide d'onde planaire correspondant, du côté opposé au substrat d'appui 110. L'invention n'est cependant pas limitée à cet agencement, les réseaux de diffraction pouvant également s'étendre dans la couche de coeur, du côté du substrat d'appui, ou dans la couche de gaine inférieure ou supérieure du guide d'onde planaire. La profondeur d'un réseau de diffraction est avantageusement inférieure ou égale à la moitié de l'épaisseur de la couche de coeur ou de gaine dans laquelle il est formé, par exemple égale à un quart de cette épaisseur.

Chacun des réseaux de diffraction 130₁, 130₂, 130₃ est constitué de portions fort indice et de portions bas indice, avec les portions fort indice constituées du matériau des couches fort indice 101₁, 101₂, 101₃, et avec les portions bas indice constituées du matériau des couches bas indice 102₁, 102₂, 102₃, 102₄.

Chacun des réseaux de diffraction 130₁, 130₂, 130₃ s'étend dans un plan (Oxy). Chacun des réseaux de diffraction 130₁, 130₂, 130₃ est ici un réseau à une dimension, avec ici des motifs invariants selon l'axe (Ox). La figure 1B illustre le composant optique 100, selon une vue en coupe dans un plan AA' parallèle au plan (Oxy), passant par le réseau de diffraction 130₂. Elle montre des motifs en forme de barreaux parallèles à l'axe (Ox).

Dans chacun des guides d'onde planaires, le réseau de diffraction 130₁, 130₂, respectivement 130₃ présente un pas moyen de répartition des motifs P₁, P₂, respectivement P₃. De préférence, le pas de répartition des motifs est constant sur toute l'étendue du réseau de diffraction. En tout état de cause, dans chacun des guides d'onde planaires 120₁, 120₂, 120₃, le réseau de diffraction présente une valeur distincte du pas moyen de répartition des motifs. Cette valeur est adaptée pour extraire de la lumière hors dudit guide d'onde planaire, à une longueur d'onde spécifique nommée longueur d'onde d'extraction, et dans une direction d'extraction déterminée. Chaque réseau de diffraction, et donc chaque guide d'onde planaire, est donc associé à une valeur distincte de la longueur d'onde d'extraction. De préférence, tous les réseaux de diffraction, et donc tous les guides d'onde planaires, sont associés à une même direction d'extraction. Chacun des réseaux de diffraction 130₁, 130₂, 130₃ présente une largeur spectrale d'environ +/-200 nm autour de sa longueur d'onde d'extraction, qui désigne une plage de longueurs d'onde qu'il est apte à extraire hors du plan (Oxy). De préférence, les longueurs d'onde d'extraction associées à chacun respectif des réseaux de diffraction 130₁, 130₂, 130₃ sont espacées deux à deux d'au moins 400 nm.

De manière avantageuse, les guides d'onde planaires 120₁, 120₂, 120₃ sont agencés, le long de l'axe (Oz), avec la valeur de la longueur d'onde d'extraction associée qui est d'autant plus basse que la distance entre le guide d'onde planaire et le substrat d'appui 110 est réduite.

De manière avantageuse, les guides d'onde planaires 120₁, 120₂, 120₃ et leurs réseaux de diffraction 130₁, 130₂, 130₃ sont chacun optimisés pour guider, respectivement extraire, de la lumière dans une gamme spectrale étroite, d'étendue inférieure à 0,1 µm. On peut donc considérer que chaque guide d'onde planaires 120₁, 120₂, respectivement 120₃, est configuré pour recevoir une unique longueur d'onde, et que le nombre de longueurs d'onde traitées par le composant optique selon l'invention est égal au nombre de guides d'onde planaires superposés qu'il comporte.

La figure 2 illustre de façon schématique le composant optique des figures 1A et 1B, en utilisation. Chacun des guides d'onde planaires 120₁, 120₂, 120₃ reçoit en entrée un faisceau lumineux distinct, référencé F1, F2 respectivement F3. Chacun des faisceaux F1, F2, F3 est un faisceau monochromatique, centré sur une longueur d'onde λ1, λ2, respectivement λ3, ici (mais de manière non limitative) une longueur d'onde appartenant au spectre infrarouge. Les longueurs d'onde λ1, λ2, λ3 sont toutes distinctes les unes des autres. Ces longueurs d'onde λ1, λ2, λ3 correspondent aux longueurs d'onde d'extraction associées aux guides d'onde planaires 120₁, 120₂, respectivement 120₃.

Chaque guide d'onde planaire 120₁, 120₂, respectivement 120₃, est apte à guider la lumière à la longueur d'onde λ1, λ2, respectivement λ3. Dans chaque guide d'onde planaire 120₁, 120₂, respectivement 120₃, le faisceau lumineux F1, F2, respectivement F3 se propage jusqu'au réseau de diffraction 130₁, 130₂, respectivement 130₃. Au niveau du réseau de diffraction 130₁, 130₂, respectivement 130₃, la lumière du faisceau lumineux F1, F2, respectivement F3 à la longueur d'onde λ1, λ2, respectivement λ3 est extraite hors du réseau de diffraction 130₁, 130₂, respectivement 130₃. Sur la figure 2, on a représenté par des flèches la lumière extraite par chacun des réseaux de diffraction 130₁, 130₂, 130₃.

La lumière extraite par les réseaux de diffraction 130₁, 130₂, 130₃ parvient ensuite jusqu'au substrat d'appui 110, subit une légère réfraction à l'interface entre la couche bas indice supérieure 102₄ et le substrat d'appui 110 (non représentée en figure 2, pour simplifier la figure), traverse ce substrat d'appui 110, et parvient jusqu'à la face supérieure 112 de ce dernier, du côté opposé aux guides d'onde planaires 120₁, 120₂, 120₃. Des simulations ont montré que la lumière extraite d'un guide d'onde planaire n'est pas perturbée par la traversée des guides d'onde planaires situés au-dessus.

La face supérieure 112 du substrat d'appui 110 forme une interface d'échange avec un échantillon. En utilisation, un échantillon est accolé contre cette face 112. Sur la figure 2, on a entouré en pointillés la zone 20 destiné à recevoir cet échantillon.

La lumière extraite par les réseaux de diffraction 130₁, 130₂, 130₃ arrive sur cette face 112 avec un angle d'incidence tel, qu'elle est entièrement réfléchie et retourne vers l'intérieur du substrat d'appui 110. Une petite partie de la lumière arrivant sur la face 112 s'échappe néanmoins hors du substrat d'appui 110, sous la forme d'une onde évanescente, avant de revenir vers l'intérieur du substrat d'appui 110. Lorsque l'échantillon est accolé contre cette face 112, l'onde évanescence pénètre donc à l'intérieur de l'échantillon, dans une région superficielle de ce dernier, avant de revenir vers l'intérieur du substrat d'appui 110. Cette onde évanescente est partiellement absorbée par l'échantillon, avec des longueurs d'onde d'absorption et des taux d'absorption qui dépendent de la composition chimique et biologique de l'échantillon.

La lumière renvoyée par la face 112, incluant l'onde évanescente ayant transité dans l'échantillon, traverse ensuite le substrat d'appui 110 et émerge de ce dernier par la face transverse 113 formant ainsi une face de sortie.

Le substrat d'appui 110 doit donc être transparent aux valeurs de longueur d'onde d'extraction λ1, λ2, λ3 associées à chacun des guides d'onde planaires 120₁, 120₂, 120₃. Il présente de préférence des pertes optiques inférieures à 3 dB/cm à ces longueurs d'onde. En outre, l'indice de réfraction du substrat d'appui 110 doit être strictement supérieur à l'indice de réfraction de l'échantillon, pour obtenir une réflexion totale sur la face 112. En pratique, l'indice de réfraction du substrat d'appui est avantageusement supérieur ou égal à 3, aux longueurs d'onde d'extraction associées aux réseaux de diffraction de chacun des guides d'onde planaires. De préférence, le substrat d'appui 110 présente en outre une faible différence d'indice de réfraction relativement à l'indice de réfraction des couches bas indice de l'empilement aux longueurs d'onde d'extraction associées aux réseaux de diffraction de chacun des guides d'onde planaires. Cette différence d'indice est avantageusement inférieure à 0,5. Un substrat d'appui 110 en silicium vérifie ces conditions, dans l'infrarouge notamment. L'invention n'est cependant pas limitée à ce matériau. Pour une utilisation avec de la lumière visible, le substrat d'appui 110 peut être par exemple en diamant ou en verre (SiO₂, BF33, quartz, etc) ou en polymère optique.

Le composant optique selon l'invention permet d'utiliser des sources lumineuses distinctes pour fournir les faisceaux lumineux F1, F2, F3. Chacune de ces sources lumineuses peut ainsi être une source lumineuse monochromatique, offrant une grande puissance optique à la longueur d'onde λ1, λ2, respectivement λ3. La lumière fournie par chacune des sources lumineuses peut ainsi être répartie sur une large surface, avec en chaque point de ladite surface suffisamment d'énergie lumineuse pour mettre en oeuvre une mesure par réflexion totale atténuée. Le composant optique 100 permet donc de faire de l'imagerie multi-spectrale grand champ par réflexion totale atténuée. Au lieu de scanner la surface à imager, ladite surface peut être imagée en une seule fois. La répartition de lumière sur la surface à imager est réalisée par le composant optique 100. La lumière se propageant dans les guides d'onde planaires se disperse le long de l'axe (Ox). Ensuite, lors de son extraction progressive par les réseaux de diffraction, cette lumière se disperse en outre selon l'axe (Oy).

La lumière est ainsi répartie selon une surface d'intérêt, appartenant à la face supérieure 112 du substrat d'appui. La longueur de cette surface d'intérêt, le long de l'axe (Oy), est égale de préférence à la longueur l des réseaux de diffraction le long de ce même axe. Des valeurs typiques pour la longueur l sont entre 1000 µm et 2000 µm, par exemple 1500 µm. Il existe un lien entre l'épaisseur du substrat d'appui et la longueur l, permettant de s'assurer que toute la lumière arrivant sur la surface d'intérêt arrive bien sur la face transverse 113 lorsqu'elle est réfléchie.

De préférence, chaque guide d'onde planaire 120₁, 120₂, respectivement 120₃, est monomode selon l'axe (Oz), et à la longueur d'onde d'extraction correspondante λ1, λ2, respectivement λ3.

En pratique, la lumière est extraite par les réseaux de diffraction en direction du substrat d'appui, et dans la direction opposée. Pour éviter des interférences destructives dues à des réflexions internes de la lumière extraite dans la direction opposée au substrat d'appui, le composant optique peut comprendre une couche d'absorption ou une surface de diffusion, du côté opposé au substrat d'appui. Ainsi, le composant optique 100 est avantageusement dépoli en face arrière, du côté opposé au substrat d'appui.

Dans chaque réseau de diffraction 130₁, 130₂, 130₃, l'extraction de lumière se fait progressivement, au fur et à mesure de la propagation de la lumière dans ce dernier. Ici, la lumière se propage dans le réseau de diffraction 130₁, 130₂, respectivement 130₃, le long de l'axe (Oy), et la lumière est extraite par ledit réseau au fur et à mesure de cette propagation. En chaque point du réseau de diffraction 130₁, 130₂, respectivement 130₃, le long de l'axe (Oy), la quantité de lumière extraite est égale au produit d'une valeur locale du taux d'extraction multipliée par la quantité de lumière restante, dans le guide d'onde planaire correspondant, à l'emplacement considéré le long de l'axe (Oy). Ainsi, comme la quantité de lumière restante dans le guide d'onde planaire diminue au fur et à mesure de la propagation de la lumière le long de l'axe (Oy), une valeur constante du taux d'extraction dans les réseaux de diffraction conduirait à une extraction inhomogène de la lumière le long de l'axe (Oy). Ainsi, de manière avantageuse, chacun des réseaux de diffraction 130₁, 130₂, respectivement 130₃ présente une valeur locale du taux d'extraction qui varie de manière monotone le long de l'axe (Oy). En particulier, la valeur locale du taux d'extraction augmente au fur et à mesure que l'on s'éloigne d'un bord d'entrée du guide d'onde planaire correspondant, au niveau duquel la lumière est injectée. Chaque valeur locale peut être calculée sur un seul motif du réseau de diffraction, ou être une valeur moyenne se rapportant à plusieurs motifs voisins, par exemple moins de cinq motifs voisins. La valeur locale du taux d'extraction varie, le long de l'axe (Oy), selon une loi non linéaire.

La valeur du taux d'extraction d'un réseau de diffraction est fonction d'une valeur de son facteur de remplissage. Dans chaque motif du réseau de diffraction considéré, le facteur de remplissage est égal à la surface de la portion fort indice, divisée par la surface totale du motif correspondant, où lesdites surfaces sont définies dans un plan de coupe parallèle au plan (Oxy). Le facteur de remplissage peut également être considéré comme un rapport de volumes (volume occupé par la portion bas indice, divisé par le volume total du motif correspondant). En particulier, ces deux définition sont exactement équivalentes pour un réseau de diffraction est de profondeur constante. L'extraction est d'autant plus élevée que le facteur de remplissage est proche de 50% (modulation d'indice la plus forte). Par conséquent, de manière avantageuse, dans chacun des réseaux de diffraction 130₁, 130₂, 130₃, une valeur locale du facteur de remplissage varie de manière monotone entre 0% et 50%, ou entre 100% et 50%, d'une extrémité à l'autre du réseau de diffraction et au fur et à mesure que l'on s'éloigne d'un bord d'entrée du guide d'onde planaire correspondant. De manière avantageuse, le facteur de remplissage ne dépasse pas 0,5 (50%). Dans ce cas, plus le facteur de remplissage est élevé, plus le taux d'extraction est élevé, et inversement. Ainsi, de manière avantageuse, dans chacun des réseaux de diffraction 130₁, 130₂, 130₃, une valeur locale du facteur de remplissage augmente au fur et à mesure que l'on s'éloigne d'un bord d'entrée du guide d'onde planaire correspondant. Dit autrement, dans chacun des réseaux de diffraction 130₁, 130₂, 130₃, une valeur locale du facteur de remplissage augmente le long d'un axe de propagation de la lumière dans ledit guide d'onde planaire correspondant, et dans le sens de propagation de la lumière le long de cet axe. Là encore, chaque valeur locale peut être calculée sur un seul motif du réseau de diffraction, ou être une valeur moyenne se rapportant à plusieurs motifs voisins, par exemple moins de cinq motifs voisins.

En complément ou en variante, la variation du taux d'extraction peut être obtenue à l'aide de réseaux de diffraction dont la profondeur varie le long de l'axe (Oz).

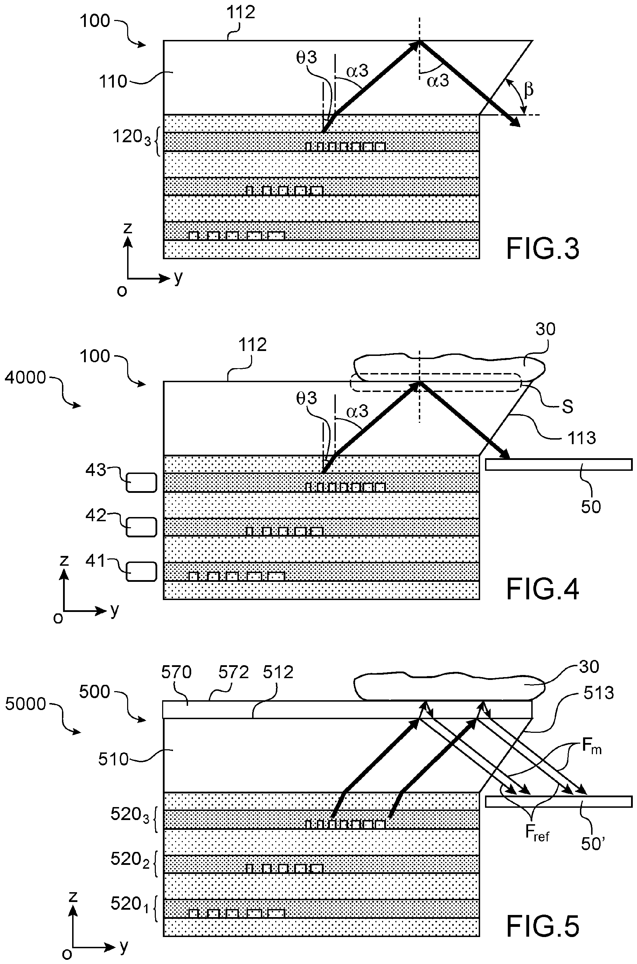

Dans chacun des guides d'onde planaires 120₁, 120₂, 120₃, le réseau de diffraction 130₁, 130₂, 130₃ est configuré pour extraire la lumière hors dudit guide d'onde planaire, à la longueur d'onde d'extraction correspondante λ1, λ2, respectivement λ3, et dans une direction d'extraction définie par un angle d'extraction θ1, θ2, respectivement θ3. Les angles d'extraction sont définis chacun relativement à la normale au plan (Oxy) du composant optique 100. A la figure 3, on a représenté l'angle d'extraction θ3, associé à l'extraction de la lumière hors du guide d'onde planaire 120₃. Au niveau de chaque guide d'onde planaire 120₁, 120₂, respectivement 120₃, la valeur de l'angle d'extraction à la longueur d'onde d'extraction λ1, λ2, respectivement λ3, est définie par le pas moyen de répartition des motifs dans le réseau de diffraction 130₁, 130₂, 130₃. De préférence, les angles d'extraction θ1, θ2, θ3 prennent tous une même valeur, notée θ.

La valeur prise par les angles d'extraction est adaptée pour que la lumière extraite des guides d'onde planaires 120₁, 120₂, 120₃ subisse une réflexion totale interne au niveau de la face supérieure 112 du substrat d'appui, compte tenu de la réfraction à l'entrée dans le substrat d'appui 110. Sur la figure 3, on note α3 l'angle définissant la direction de propagation de la lumière extraite par le réseau de diffraction 103₃, après réfraction à l'entrée dans le substrat d'appui 110 (à l'interface entre la couche bas indice supérieure et le substrat d'appui 110). Dit autrement, α3 désigne l'angle d'extraction θ3, modifiée par la réfraction à l'entrée dans le substrat d'appui. L'angle α3 est défini relativement à la normale au plan (Oxy). Les réseaux de diffraction 130₁, 130₂, 130₃ sont associés chacun à un angle respectif α1, α2, α3. De préférence, les angles α1, α2, α3 prennent tous la même valeur notée α.

En considérant que la face supérieure 112 du substrat d'appui s'étend dans un plan (Oxy), l'angle de propagation de la lumière extraite hors d'un guide d'onde planaire après réfraction à l'interface entre la couche bas indice supérieure et le substrat d'appui 110, est égal à l'angle d'incidence de cette même lumière sur la face 112. Ainsi, la valeur prise par les angles α1, α2, α3 (angles d'extractions modifiés par la réfraction à l'interface entre la couche bas indice supérieure et le substrat d'appui 110) doit être strictement supérieure à un premier angle critique de réflexion totale interne, à l'interface entre le substrat d'appui et un milieu externe, au niveau de la face 112 du substrat d'appui. Ce premier angle critique de réflexion totale interne est déterminé par les lois de Snell-Descartes, et dépend de l'indice de réfraction du substrat d'appui 110 et de l'indice de réfraction du milieu accolé contre la face 112, en utilisation. Lorsque ce milieu est de l'air, le premier angle critique de réflexion totale interne vaut environ 17° si le substrat d'appui 110 est du silicium. Ce premier angle critique de réflexion totale interne augmente avec l'indice de réfraction du milieu destiné à être accolé contre la face supérieure 112. En pratique, ce milieu n'est pas de l'air, mais un échantillon constitué d'un milieu biologique ou chimique d'indice de réfraction moyen strictement supérieur à l'unité.

En outre, la valeur prise par les angles d'extraction est adaptée pour que la lumière extraite des guides d'onde planaires 120₁, 120₂, 120₃, et réfléchie sur la face supérieure 112 du substrat d'appui, puisse émerger hors du substrat d'appui lorsqu'elle arrive au niveau de la face de sortie 113. Pour cela, cette lumière doit arriver sur la face de sortie 113, avec un angle d'incidence strictement inférieur à un second angle critique de réflexion totale interne. Le second angle critique de réflexion totale interne est défini relativement à la normale à la face de sortie 113. Ce second angle critique de réflexion totale interne est déterminé par les lois de Snell-Descartes, et dépend de l'indice de réfraction du substrat d'appui 110 et de l'indice de réfraction du milieu en contact avec la face de sortie 113, en utilisation. Ce milieu est généralement de l'air, de sorte que le second angle critique de réflexion totale interne vaut environ 17° si le substrat d'appui 110 est du silicium.

Dans l'exemple représenté en figure 3, la face de sortie 113 est inclinée d'un angle β relativement au plan (Oxy). Ici, le substrat d'appui 110 est en silicium cristallin, et l'angle β est égal à 54,74°, ce qui correspond à un angle de gravure anisotrope d'un plan cristallin (plan 111) dans un cristal de type cubique à faces centrés (par exemple du silicium) ou dans un cristal à maille carrée de type diamant.

Pour simplifier, le composant optique 100 est configuré de sorte que la lumière extraite des guides d'onde planaires 120₁, 120₂, 120₃, et réfléchie sur la face supérieure 112 du substrat d'appui, arrive sur la face de sortie 113 du substrat d'appui à incidence normale (soit un angle d'incidence tel que défini ci-dessus qui prend la valeur nulle). Pour cela, l'angle d'incidence α de la lumière sur la face supérieure 112 du substrat d'appui doit être égal à β, ici égal à 54,74°. La valeur prise par les angles d'extraction modifiés par la réfraction à l'interface entre la couche bas indice supérieure et le substrat d'appui 110, est donc égale à β, ici égale à 54,74°. Cette valeur est strictement supérieure à tout premier angle critique de réflexion totale interne associé à un milieu accolé contre la face 112 du substrat d'appui ayant un indice de réfraction inférieur ou égal à environ 2,8.

En variante, on peut avoir β égal à 45° (plan 110 d'un cristal cubique à faces centrées).

L'invention n'est pas limitée à cet exemple, et couvre toutes les autres combinaisons d'angle d'extraction et d'angle d'inclinaison de la face de sortie 113, permettant d'obtenir le trajet souhaité de la lumière.

La figure 4 illustre de façon schématique un premier mode de réalisation d'un système optique 4000 selon l'invention, comportant le composant optique 100 des figures 1A et 1B.

Le système optique 4000 comporte, outre le composant optique 100, une pluralité de sources lumineuses élémentaires 41, 42, 43, configurées chacune pour émettre le faisceau lumineux F1, F2, respectivement F3 tel que représenté à la figure 2. Chacune des sources lumineuses élémentaires 41, 42, 43 est couplée optiquement avec l'un respectif des guides d'onde planaires du composant optique 100. L'injection de lumière se fait ici par la tranche du composant optique 100. Chacune des sources lumineuses élémentaires 41, 42, 43 est constituée ici par un laser à cascade quantique, c'est-à-dire une source lumineuse monochromatique offrant une grande puissance optique à la longueur d'onde λ1, λ2, respectivement λ3. En variante, les sources lumineuses élémentaires peuvent comprendre une ou plusieurs diodes électroluminescentes.

La lumière émise par les sources lumineuses élémentaires 41, 42, 43, est répartie par le composant optique 100 sur la surface d'intérêt S appartenant à la face supérieure 112 du substrat d'appui. En utilisation, un échantillon 30 est accolé contre la face supérieure 112 du substrat d'appui, au niveau de ladite surface d'intérêt S.

Dans l'exemple illustré à la figure 4, le système optique 4000 comporte en outre un détecteur 50, qui s'étend parallèle à un plan (Oxy), du côté du composant optique 100 opposé aux sources lumineuses élémentaires 41, 42, 43. Une surface de détection du détecteur 50 est de préférence un carré ou un rectangle, de côté compris entre 1 mm et 10 mm. Le détecteur 50 est de type matriciel. Il est sensible à chacune des longueurs d'onde d'extraction λ1, λ2, et λ3, associées aux réseaux de diffraction de chacun des guides d'onde planaires du composant optique 100. Le détecteur 50 est de préférence un détecteur infrarouge matriciel, par exemple une matrice de bolomètres, ou une matrice de photodiodes. En variante, le détecteur 50 peut être sensible dans le visible, constitué par exemple d'une matrice de photodiodes. Le détecteur 50 est configuré pour recevoir la lumière émergeant du composant optique 100 par la face de sortie 113.

Le détecteur 50 est placé très proche de la face de sortie 113, sans optique de formation d'image entre les deux. De manière avantageuse, une distance selon (Oz) entre le détecteur 50 et la face 112 est comprise entre 100 µm et 1,5 µm. Cette distance peut être égale à l'épaisseur selon (Oz) du composant optique 100, ce dernier pouvant alors servir d'entretoise entre l'échantillon et un module de détection comportant le détecteur 50.

La figure 5 illustre de manière schématique un système optique 5000 comportant un composant optique 500 selon un deuxième mode réalisation de l'invention, ainsi qu'un détecteur matriciel 50' tel que celui de la figure 4.

Le composant optique 500 ne diffère de celui des figures 1A et 1B qu'en ce qu'il comporte en outre une couche de séparation de faisceaux 570, accolée contre la face supérieure 512 du substrat d'appui 510, du côté opposé aux guides d'onde planaires. La couche de séparation de faisceaux 570 est transparente aux valeurs de longueur d'onde d'extraction λ1, λ2, λ3 associées à chacun des guides d'onde planaires 520₁, 520₂, 520₃. Elle présente de préférence des pertes optiques inférieures à 3 dB/cm à ces longueurs d'onde. La couche de séparation de faisceaux 570 présente en outre un indice de réfraction distinct de celui du substrat d'appui (aux longueurs d'onde λ1, λ2, λ3). Elle présente de préférence un indice de réfraction élevé, par exemple strictement supérieur à 2. Son indice de réfraction peut cependant être inférieur à celui du substrat d'appui 510. La couche de séparation de faisceaux 570 est par exemple en germanium, en alliage SiGe, en alliage ZnS, ou tout autre matériau vérifiant ces deux conditions. L'épaisseur de la couche de séparation de faisceaux 570 est comprise de préférence entre 1 µm et 20 µm, par exemple égale à 10 µm.

En fonctionnement, l'échantillon 30 est accolé contre une partie au moins de la face supérieure 572 de la couche de séparation de faisceaux 570, du côté opposé aux guides d'onde planaires 520₁, 520₂, 520₃. La lumière arrivant au niveau de la face supérieure 512 du substrat d'appui 510 est pour partie réfléchie, et pour partie transmise, selon la formule de Fresnel.

La lumière réfléchie se propage alors directement jusqu'à la face de sortie 513 du substrat d'appui, au niveau de laquelle elle émerge hors du composant optique 500.

La lumière transmise est réfractée, et se propage jusqu'à la face supérieure 572 de la couche de séparation de faisceau 570. De façon similaire à ce qui a été décrit à propos du premier mode de réalisation de l'invention, cette lumière est réfléchie au niveau de cette face supérieure 572, à l'interface entre l'échantillon 30 et la couche de séparation de faisceau 570. Au niveau de ladite interface, une onde évanescente circule dans une région superficielle de l'échantillon 30, où elle est partiellement absorbée. La lumière réfléchie à ladite interface traverse de nouveau la couche de séparation de faisceau 570, puis pénètre dans le substrat d'appui 510 et émerge du substrat d'appui 510 au niveau de la face de sortie 513.

La lumière ayant été réfléchie à l'interface entre le substrat d'appui 510 et la couche de séparation de faisceau 570, et émergeant du substrat d'appui 510, forme un faisceau de référence Fref. La lumière ayant été transmise à l'interface entre le substrat d'appui 510 et la couche de séparation de faisceau 570, et émergeant finalement du substrat d'appui 510, forme un faisceau de mesure Fm. Le faisceau de mesure Fm inclut l'onde évanescente ayant circulé dans l'échantillon 30. Le faisceau de mesure Fm et le faisceau de référence Fref interfèrent entre eux, et les interférences sont détectées et mesurées par le détecteur matriciel 50'.

Ce deuxième mode de réalisation permet d'analyser l'échantillon sur le principe de l'imagerie multi-spectrale par réflexion totale atténuée, non pas sur la base d'une mesure d'absorption, comme dans le premier mode de réalisation, mais sur la base d'une mesure de phase. Cette alternative est particulièrement avantageuse, lorsqu'une analyse basée directement sur l'absorption est peu adaptée. Il s'agit notamment de cas dans lesquels l'échantillon comporte une grande quantité de molécules d'eau et une faible quantité de molécules tierces, et où l'absorption par les molécules tierces est négligeable relativement à l'absorption par les molécules d'eau, de sorte qu'une analyse basée directement sur l'absorption ne permettrait pas de détecter les molécules tierces. L'analyse sur la base d'une mesure de phase repose sur l'idée qu'un pic d'absorption induit un saut d'indice, et donc un saut de phase.

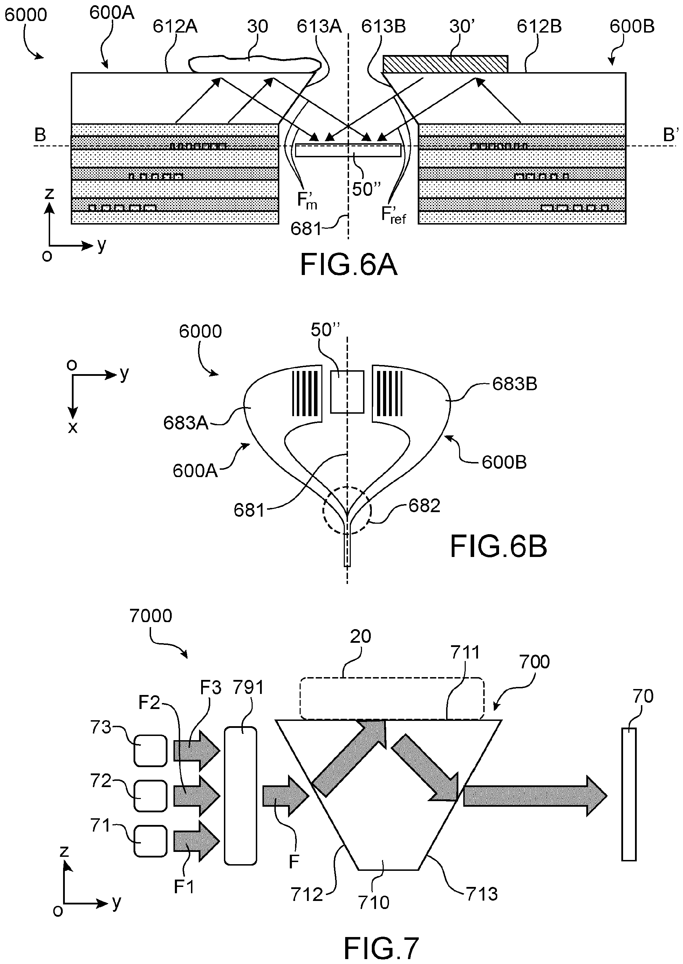

Les figures 6A et 6B illustrent de manière schématique un système optique 6000 selon l'invention. La figure 6A illustre le système optique 6000, dans une vue en coupe selon un plan vertical parallèle au plan (Oyz). La figure 6B illustre le système optique 6000 dans une vue en coupe selon un plan horizontal BB' parallèle au plan (Oxy).

Le système optique 6000 est une variante du système de la figure 5, pour analyser l'échantillon 30 sur le principe de l'imagerie multi-spectrale par réflexion totale atténuée, sur la base d'une mesure de phase.

Le système 6000 comporte notamment :
- un premier composant optique 600A, tel que celui des figures 1A et 1B ; et
- un second composant optique 600B, tel que celui des figures 1A et 1B.

Le premier composant optique 600A s'étend parallèle à plan (Oxy) nommé premier plan du composant optique. Il comporte une face de sortie 613A, d'où émerge la lumière, en fonctionnement.

Le second composant optique 600B s'étend également parallèle à plan (Oxy). Il comporte une face de sortie 613B, d'où émerge la lumière en fonctionnement.

Le premier composant optique 600A et le second composant optique 600B sont agencés ici symétriques l'un de l'autre, relativement à un plan de symétrie 681 qui s'étend parallèle au plan (Oxz) (donc orthogonal au premier plan du composant optique). Le premier composant optique 600A et le second composant optique 600B sont agencés espacés l'un de l'autre, de part et d'autre du plan de symétrie 681, avec leurs faces de sortie respectives 613A, 613B au regard l'une de l'autre.

Le système optique 6000 comporte en outre un séparateur optique 682 et deux bras de guidage 683A, 683B.

Le séparateur optique 682 forme un séparateur, configuré pour répartir vers deux voies de sortie la lumière arrivant par une unique voie d'entrée. Le séparateur optique 682 est constitué en plusieurs étages superposés, où chaque étage comporte une entrée et deux sorties.

De même, les deux bras de guidage 683A, 683B sont chacun constitués en plusieurs étages superposés. Chaque étage du séparateur optique 682 est configuré pour répartir la lumière vers un étage respectif du bras de guidage 683A et vers un étage respectif du bras de guidage 683B.

L'un des bras de guidage, 683A, comporte le premier composant optique 600A. L'autre des bras de guidage 683B, comporte le second composant optique 600B.

En pratique, les deux composants optiques 600A, 600B, les deux bras de guidage 683A, 683B et le séparateur optique 682 sont formés ensemble dans un même empilement de couches fort indice et de couches bas indice. Chaque étage du séparateur optique 682 est formé dans une couche fort indice respective, et entouré par le matériau des couches bas indice. De même, chaque étage de chacun des deux bras de guidage 683A, 683B est formé dans une couche fort indice respective, et entouré par le matériau des couches bas indice. Chaque étage de chacun des deux bras de guidage 683A, 683B, en matériau fort indice, s'élargit progressivement dans le plan (Oxy), depuis un bord accolé au séparateur optique jusqu'à un bord au composant optique 600A ou 600B. La figure 6B montre une vue en coupe du système 6000, passant par la couche fort indice supérieure de l'empilement de couches. Ici, le système optique 6000 présente une symétrie planaire relativement au plan 681.

Ici, le système optique 6000 comporte en outre un détecteur matriciel 50" tel que décrit en référence à la figure 4. Ce dernier s'étend dans un plan parallèle au plan (Oxy), entre les faces de sortie 613A, 613B des premier et second composants optiques.

En fonctionnement, l'échantillon 30 est accolé contre une partie au moins de la face supérieure 612A du substrat d'appui du premier composant optique 600A. En outre, un échantillon de référence 30', constitué d'un matériau connu, est accolé contre une partie au moins de la face supérieure 612B du substrat d'appui du second composant optique 600B.

La lumière arrivant en entrée du séparateur optique 682 est répartie dans chacun des deux bras de guidage 683A, 683B, de préférence avec la même quantité de lumière envoyée dans chaque bras de guidage. La lumière se propage dans le bras de guidage 683A, respectivement 683B, jusqu'au premier composant optique 600A, respectivement jusqu'au second composant optique 600B.

Dans le premier composant optique 600A, la lumière se comporte comme dans le composant optique des figures 1A et 1B, et émerge par la face de sortie 613A en incluant une onde évanescente ayant circulé dans l'échantillon 30. La lumière émergeant par la face de sortie 613A forme un faisceau de mesure F'm.

De manière similaire, dans le second composant optique 600B, la lumière se comporte comme dans le composant optique des figures 1A et 1B, et émerge par la face de sortie 613B en incluant une onde évanescente ayant circulé dans l'échantillon de référence 30'. La lumière émergeant par la face de sortie 613B forme un faisceau de référence F'ref.

Le faisceau de mesure F'm et le faisceau de référence F'ref interfèrent entre eux, et les interférences sont détectées et mesurées par le détecteur matriciel 50". Ce mode de réalisation constitue ainsi un second moyen pour faire de l'imagerie multi-spectrale par réflexion totale atténuée, à partir de mesures de phase.

En utilisation des sources lumineuses élémentaires sont couplées optiquement au séparateur optique 682, en amont des bras de guidage dans le sens de circulation de la lumière dans le système optique. Chaque source lumineuse est couplée à un étage respectif du séparateur optique 682.

Un phénomène de moiré apparaît en cas de sous-échantillonnage d'une figure d'interférence, et se traduit par la détection de franges d'interférences d'interfrange plus élevé que la valeur réelle d'interfrange. Les franges détectées présentent alors un interfrange de Moiré, supérieur aux dimensions du détecteur, empêchant alors toute mesure de l'interfrange. Dans une variante non représentée, les deux composants optiques ne sont pas tout à fait symétriques entre eux relativement au plan 681. Cela permet, grâce au phénomène de moiré, d'obtenir sur le détecteur matriciel des franges d'interférence dont l'interfrange est compatible avec les dimensions du détecteur. On peut ainsi observer des franges, même avec un détecteur matriciel dont l'échantillonnage spatial n'est pas assez fin pour résoudre les franges d'interférence théoriques. Ainsi, le premier composant optique est configuré de manière à ce que la lumière émerge par sa face de sortie, orientée selon un angle θA relativement au plan (Oxy). Le second composant optique est configuré de manière à ce que la lumière émerge par sa face de sortie, orientée selon un angle θB relativement au plan (Oxy), avec les angles θA et θB distincts l'un de l'autre en valeur absolue. Pour cela, les deux composants optiques peuvent avoir leurs faces de sortie respectives non symétriques relativement au plan 681, et/ou des pas des réseaux de diffraction distincts deux à deux, d'un composant optique à l'autre, et pour une même longueur d'onde d'extraction considérée. La différence entre θA et θB, en valeur absolue, est avantageusement inférieure à 1°. Une légère translation du faisceau lumineux émergeant du composant optique désaligné peut être compensée par une translation des réseaux d'extraction dans ce dernier. Cette dissymétrie permet, grâce au phénomène de moiré, d'obtenir sur le détecteur matriciel des franges d'interférence dont l'interfrange est compatible avec l'échantillonnage spatial et les dimensions de ce dernier.

La figure 7 illustre enfin, de façon schématique, un système optique 7000 et composant optique 700 pouvant offrir des avantages comparables aux avantages offerts par l'invention.

Dans ce système, le composant optique 700 pour un dispositif d'imagerie multi-spectrale par réflexion totale atténuée, comporte simplement un prisme optique 710. Le prisme 710 est un composant massif, constitué d'un matériau optiquement transparent aux longueurs d'onde utilisées, avec de préférence des pertes optiques inférieures à 3 dB/cm aux longueurs d'onde qu'il est destiné à recevoir. Le prisme 710 est par exemple en silicium, pour une utilisation avec de la lumière infrarouge. D'autres matériaux sont également possibles, par exemple le diamant, un verre (SiO₂, BF33, quartz, etc) ou un polymère optique, pour des applications dans le visible.

La forme du prisme 710 est celle d'un prisme à angle droit, tronqué selon un plan parallèle à sa base, et nommé « prisme de Dove ». Le prisme 710 comporte une face d'appui 711, parallèle au plan (Oxy). En utilisation, un échantillon à analyser est accolé contre la face d'appui 711. Sur la figure 7, on a entouré en pointillés la zone 20 destinée à recevoir cet échantillon. Le prisme 710 comporte en outre une première face transverse 712, et une seconde face transverse 713, définissant ensemble un angle droit.

Le système optique 7000 comporte en outre :
- une pluralité de sources lumineuses élémentaires 71, 72, 73, ici au nombre de trois ;
- un multiplexeur en longueur d'onde 791 ; et
- un détecteur matriciel 70.

Les sources lumineuses élémentaires 71, 72, 73 sont configurées chacune pour émettre le faisceau lumineux F1, F2, respectivement F3. Chacun des faisceaux lumineux F1, F2, F3 est un faisceau lumineux monochromatique, centré sur une valeur distincte de longueur d'onde appartenant par exemple au spectre infrarouge ou au spectre visible. Chacune des sources lumineuses élémentaires 71, 72, 73 est constituée ici par un laser à cascade quantique, c'est-à-dire une source lumineuse monochromatique offrant une grande puissance optique à sa longueur d'onde d'émission. Les faisceaux lumineux F1, F2, F3 sont tous envoyés en entrée du multiplexeur en longueur d'onde 791. Le multiplexeur en longueur d'onde 791 comporte ici au moins autant d'entrées qu'il y a de sources lumineuses élémentaires 71, 72, 73, et une unique sortie qui renvoie un faisceau lumineux F. Le faisceau lumineux F peut être polychromatique, si toutes les sources lumineuses élémentaires 71, 72, 73 sont allumées en même temps. En variante, les différentes sources lumineuses élémentaires 71, 72, 73 sont allumées tour à tour, et le faisceau lumineux F est à chaque instant un faisceau monochromatique. Le faisceau lumineux F se propage jusqu'à la première face transverse 712, de préférence en se propageant dans un plan parallèle au plan (Oxy).

Au niveau de la première face transverse 712, le faisceau lumineux F est réfracté en direction de la face d'appui 711, et arrive sur la face d'appui 711 avec un angle d'incidence strictement supérieur à un angle critique de réflexion totale interne. Cet angle est déterminé par les lois de Snell-Descartes, et dépend de l'indice de réfraction du prisme 710 et de l'indice de réfraction du milieu accolé contre la face d'appui 711, en utilisation. Lorsque ce milieu est de l'air, cet angle vaut environ 17° si le prisme 710 est en silicium. En pratique, ce milieu n'est pas de l'air, mais un échantillon d'indice de réfraction moyen strictement supérieur à l'unité.

Le faisceau lumineux F est ainsi entièrement réfléchi sur la face d'appui 711, avec toutefois une onde évanescente qui circule dans un échantillon accolé contre ladite face d'appui, selon le principe de réflexion totale atténuée. Le faisceau lumineux F réfléchi sur la face d'appui 711 se propage ensuite à l'intérieur du prisme 710 jusqu'à la seconde face transverse 713, puis émerge hors du prisme 710 au niveau de cette dernière. Il est alors reçu par le détecteur matriciel 70. Le détecteur matriciel 70 est sensible à au moins une longueur d'onde destinée à être injectée en entrée du prisme 710. Le détecteur matriciel 70 est de préférence un détecteur infrarouge matriciel, par exemple une matrice de bolomètres, ou une matrice de photodiodes. En variante, le détecteur matriciel 70 peut être sensible dans le visible, constitué par exemple d'une matrice de photodiodes. Le détecteur matriciel 70 dans un plan orthogonal au plan (Oxy) (ici un plan (Oxz)).

Ce mode de réalisation permet de mettre en oeuvre de l'imagerie multi-spectrale par réflexion totale atténuée, et d'utiliser des sources lumineuses offrant chacune une grande puissance optique à leur longueur d'onde d'émission. La lumière fournie par chacune des sources lumineuses peut ainsi être répartie sur une large surface, avec en chaque point de ladite surface suffisamment d'énergie lumineuse pour mettre en oeuvre une mesure par réflexion totale atténuée. On peut obtenir une image multi-spectrale grand champ d'un échantillon, sans déplacement de l'échantillon relativement à la face d'appui 711. Le temps d'acquisition de l'image multi-spectrale grand champ est donc amplement réduit, en comparaison avec l'art antérieur.

L'invention couvre également un système optique, non représenté, qui comporte :
- un composant optique selon l'invention (ou tel qu'illustré en figure 7) ;
- un détecteur matriciel associé (voir figures 4 à 6B, ou même figure 7) ;
- éventuellement des sources lumineuses élémentaires telles qu'illustrées en figure 4 (ou en figure 7) ; et
- un calculateur, relié au détecteur matriciel, configuré pour recevoir en entrée des mesures d'intensité lumineuse fournies par le détecteur matriciel, et pour fournir en sortie une image multi-spectrale d'un échantillon.

L'image multi-spectrale est par exemple une carte de répartition de valeurs d'absorption pour différentes longueurs d'onde prédéterminées, ou une carte de répartition de valeurs de déphasage pour différentes longueurs d'onde prédéterminées.

L'invention couvre également un procédé d'utilisation d'un composant optique et un système optique selon l'invention (ou tel qu'illustré en figure 7), pour obtenir une image multi-spectrale grand champ d'un échantillon. Le procédé met en oeuvre les étapes suivantes :
- on accole un échantillon contre une face d'appui du composant optique ;
- on éclaire l'échantillon à l'aide d'une pluralité de faisceaux lumineux, chacun à une longueur d'onde différente, par l'intermédiaire dudit composant optique ;
- on récupère la lumière émergeant du composant optique, pour former une image multi-spectrale grand champ de l'échantillon, où ladite image est une carte de répartition de valeurs d'absorption pour différentes longueurs d'onde prédéterminées, ou une carte de répartition de valeurs de déphasage pour différentes longueurs d'onde prédéterminées.

De préférence, le procédé selon l'invention ne comporte aucune étape de balayage pour déplacer le composant optique autant de fois qu'il y a de points sur ladite carte.

Le composé optique selon l'invention peut être réalisé à partir d'un premier substrat en silicium. Des épitaxies successives sont réalisées sur ce premier substrat, pour former l'empilement de couches bas indice et haut indice, avec des gravures partielles anisotropes pour former les réseaux de diffraction. Un second substrat en silicium est accolé sur l'empilement, du côté opposé au premier substrat, puis le premier substrat est retiré. Le second substrat présente une face transverse orientée en biais, formant la face de sortie du composant optique selon l'invention. Cette face transverse est formée avant le report sur l'empilement, par exemple par gravure anisotrope ou par un procédé de moulage et emboutissage. Le composé optique obtenu est donc un composant intégré sur silicium, pour de l'imagerie ATR.

Dans un exemple de réalisation particulier, le composant optique comporte quatre guides d'onde planaires superposés, associées respectivement aux longueurs d'onde d'extraction λ4=6,04 µm, λ3=7,25 µm, λ2=8,10µm, λ1=9,26 µm. Le guide d'onde planaire associé à la longueur d'onde λ4 est le plus proche du substrat d'appui. Les épaisseurs respectives des couches de coeur desdits guides d'onde planaires valent respectivement e4=1,6 µm, e3=2,0 µm, e2=2,2 µm, e1=2,5 µm. Chacun des guides d'onde planaires est ainsi monomode dans la direction verticale, et à la longueur d'onde d'extraction associée. Les épaisseurs des couches bas indice au-dessus de chaque couche de coeur valent respectivement E4=4,1 µm, E3=4,7 µm, E2=5,3 µm, E1=6,0 µm. On limite ainsi des pertes par diaphonie entre deux guides d'onde planaires voisins. La face de sortie est inclinée à 54,74° relativement à un plan (Oxy), et la lumière est extraite des guides d'onde planaires selon un angle d'extraction lui aussi égal à 54,74° après réfraction à l'interface entre la couche bas indice supérieure et le substrat d'appui. Pour cela, le pas des réseaux de diffraction vaut respectivement P4=5,48 µm, P3=6,51 µm, P2=7,30 µm, P1=8,35 µm.

L'invention n'est pas limitée aux exemples décrits, et couvre de nombreuses autres variantes, notamment avec des matériaux différents, un nombre différent de guides d'onde planaires, des longueurs d'onde d'extraction différentes, etc. On peut éventuellement avoir des couches intercalaires entre les couches bas indice et haut indice de l'empilement de couches et/ou entre le substrat d'appui et l'empilement. Dans les exemples décrits, les motifs des réseaux de diffraction s'étendent le long de lignes droites parallèles entre elles. En variante, ces motifs peuvent s'étendre le long de lignes courbes convexes. Les courbes, ne sont pas forcément identiques sur tout le long du réseau de diffraction. Il peut être avantageux d'avoir des motifs qui n'ont pas la même courbure à l'avant ou à l'arrière du réseau de diffraction considéré. Selon d'autres variantes, les réseaux peuvent être des réseaux de diffraction à deux dimensions, permettant d'éclairer l'échantillon à analyser sous deux polarisations différentes. Selon d'autres variantes encore, la face de sortie n'est pas plane, mais incurvée, par exemple pour faire diverger la lumière émergeant du composant optique. Dans ce cas, un angle d'inclinaison de la face de sortie est défini en considérant un plan reliant deux arêtes délimitant ladite face de sortie.

L'invention permet de réaliser de l'imagerie ATR multi-spectrale, par exemple dans l'infrarouge. Elle permet de réaliser des analyses chimiques ou biologiques d'échantillon, par spectroscopie, et d'obtenir rapidement des images grand champ avec une instrumentation compacte. Elle trouve notamment à s'appliquer dans le domaine de la santé et de l'agro-alimentaire.

## Revendications

1. Composant optique (100; 500; 600A ; 600B) pour un dispositif d'imagerie multi-spectrale par réflexion totale atténuée, **caractérisé en ce qu'**il comporte un substrat d'appui (110; 510) et au moins deux guides d'onde planaires (120₁, 120₂, 120₃; 520₁, 520₂, 520₃), et **en ce que** :
- chacun des guides d'onde planaires (120₁, 120₂, 120₃; 520₁, 520₂, 520₃) s'étend selon un plan respectif, avec lesdits plans respectifs parallèles entre eux et parallèles à un plan du composant optique ;
- les guides d'onde planaires (120₁, 120₂, 120₃; 520₁, 520₂, 520₃) et le substrat d'appui (110; 510) sont superposés ensemble le long d'un axe orthogonal au plan du composant optique, avec le substrat d'appui qui recouvre les guides d'onde planaires ;
- chacun des guides d'onde planaires comporte au moins un réseau de diffraction (130₁, 130₂, 130₃), pour extraire de la lumière hors dudit guide d'onde planaire ;
- deux au moins des guides d'onde planaires ont leurs réseaux de diffraction (130₁, 130₂, 130₃) respectifs qui présentent des valeurs du pas moyen de répartition des motifs distinctes l'une de l'autre ;
- le substrat d'appui (110 ; 510) comporte, d'un côté opposé aux guides d'onde planaires (120₁, 120₂, 120₃; 520₁, 520₂, 520₃), une face (112) configurée pour former une interface d'échange avec un échantillon (30, 30') et pour être incidente à la lumière extraite des guides d'onde planaires (120₁, 120₂, 120₃; 520₁, 520₂, 520₃) ; et
- une face de sortie (113 ; 513 ; 613A ; 613B) du composant optique (100 ; 500 ; 600A ; 600B) correspond à une face latérale du substrat d'appui (110 ; 510) arrangée de manière à ce que la lumière extraite des guides d'onde planaires (120₁, 120₂, 120₃; 520₁, 520₂, 520₃) et réfléchie par réflexion totale dans le substrat d'appui (110 ; 510) au niveau de la face (112) configurée pour former l'interface d'échange émerge du composant optique (100 ; 500 ; 600A ; 600B) à travers cette face de sortie (113 ; 513 ; 613A ; 613B).

2. Composant optique (100; 500; 600A ; 600B) selon la revendication 1, **caractérisé en ce que** chacun des guides d'onde planaires (120₁, 120₂, 120₃; 520₁, 520₂, 520₃) comporte une couche de coeur (121₁, 121₂, 121₃) intercalée entre deux couches de gaine (122₁, 122₂, 122₃), et **en ce que** dans chacun des guides d'onde planaires, l'au moins un réseau de diffraction (130₁; 130₂; 130₃) est constitué de portions fort indice et de portions bas indice, avec les portions fort indice constituées du matériau de la couche de coeur et les portions bas indice constituées du matériau des couches de gaine.

3. Composant optique (100; 500; 600A ; 600B) selon la revendication 2, **caractérisé en ce que** dans chacun des guides d'onde planaires, l'au moins un réseau de diffraction (130₁; 130₂; 130₃) présente une valeur locale du facteur de remplissage qui varie de façon monotone le long d'un axe de propagation de la lumière dans ledit guide d'onde planaire et dans le sens de propagation de la lumière le long de cet axe, la valeur locale du facteur de remplissage se rapprochant ainsi progressivement de la valeur 0,5, avec le facteur de remplissage qui désigne un rapport entre une surface occupée par la portion bas indice dans un motif du réseau de diffraction et une surface totale occupée par ledit motif, lesdites surfaces étant définies dans un plan de coupe parallèle au plan du composant optique.

4. Composant optique (100; 500; 600A; 600B) selon l'une quelconque des revendications 1 à 3, **caractérisé en ce que** les guides d'onde planaires (120₁, 120₂, 120₃; 520₁, 520₂, 520₃) sont agencés par ordre décroissant d'une valeur de longueur d'onde d'extraction associée, avec la valeur de longueur d'onde d'extraction qui diminue en même temps que diminue la distance entre le guide d'onde planaire et le substrat d'appui (110 ; 510).

5. Composant optique (100; 500; 600A; 600B) selon l'une quelconque des revendications 1 à 4, **caractérisé en ce que** le substrat d'appui (110 ; 510) est transparent à des valeurs de la longueur d'onde d'extraction associées aux réseaux de diffraction (130₁; 130₂; 130₃) de chacun des guides d'onde planaires.

6. Composant optique (100; 500; 600A; 600B) selon l'une quelconque des revendications 1 à 5, **caractérisé en ce qu'**un indice de réfraction du substrat d'appui (110; 510) est supérieur ou égal à 3, à une longueur d'onde maximale parmi des longueurs d'onde d'extraction associées aux réseaux de diffraction (130₁; 130₂; 130₃) de chacun des guides d'onde planaires.

7. Composant optique (100; 500; 600A; 600B) selon l'une quelconque des revendications 1 à 6, **caractérisé en ce que** la face de sortie (113 ; 513 ; 613A; 613B) est orientée transverse relativement au plan du composant optique.

8. Composant optique (100; 500; 600A; 600B) selon l'une quelconque des revendications 1 à 7, **caractérisé en ce que** dans chacun des réseaux de diffraction (130₁; 130₂; 130₃), la valeur du pas moyen de répartition des motifs est adaptée pour extraire un faisceau lumineux à une valeur déterminée de longueur d'onde d'extraction, et selon un angle d'extraction défini relativement à la normale au plan du composant optique, avec une même valeur de l'angle d'extraction pour tous les réseaux de diffraction et avec ladite valeur de l'angle d'extraction, modifiée par la réfraction à l'entrée dans le substrat d'appui, qui est supérieure à un angle critique de réflexion totale interne à une interface entre le substrat d'appui et un milieu extérieur.

9. Composant optique (100; 500; 600A ; 600B) selon la revendication 8, **caractérisé en ce que** ladite valeur de l'angle d'extraction, modifiée par la réfraction à l'entrée dans le substrat d'appui, est supérieure ou égale à 45°.

10. Composant optique (100; 500; 600A ; 600B) selon la revendication 8 ou 9, **caractérisé en ce que** la face de sortie (113 ; 513 ; 613A; 613B) est orientée transverse relativement au plan du composant optique, avec un angle (β) entre le plan du composant optique et ladite face de sortie, qui est sensiblement égal à la valeur de l'angle d'extraction modifiée par la réfraction à l'entrée dans le substrat d'appui, à plus ou moins 5° près.

11. Composant optique (500) selon l'une quelconque des revendications 1 à 10, **caractérisé en ce qu'**il comporte en outre une couche de séparation de faisceaux (570), superposée au substrat d'appui (510) du côté opposé au guides d'onde planaires, transparente à des valeurs de longueur d'onde d'extraction associées aux réseaux de diffraction de chacun des guides d'onde planaires, et d'indice de réfraction distinct de celui du substrat d'appui.

12. Système optique (4000 ; 6000) **caractérisé en ce qu'**il comporte un composant optique (100 ; 600A) selon l'une quelconque des revendications 1 à 11, ainsi qu'une pluralité de sources lumineuses élémentaires (41, 42, 43), où chaque source lumineuse élémentaire est couplée optiquement à l'un respectif des guides d'onde planaires et apte à émettre un faisceau lumineux monochromatique de spectre centré sur une valeur de longueur d'onde d'extraction associée audit guide d'onde planaire.

13. Système optique (4000 ; 6000) selon la revendication 12, **caractérisé en ce qu'**il comporte en outre un détecteur matriciel (50 ; 50"), sensible à des valeurs de longueur d'onde d'extraction associées aux différents guides d'onde planaire, et configurée pour recevoir de la lumière émergeant du substrat d'appui après qu'elle ait été émise par les sources lumineuses élémentaires et qu'elle ait circulé dans le composant optique.

14. Système optique selon la revendication 13, **caractérisé en ce qu'**il comporte en outre un calculateur, configuré pour recevoir en entrée des mesures d'intensité lumineuse fournies par le détecteur matriciel, et pour fournir en sortie une image multi-spectrale d'un échantillon.

15. Système optique (6000) selon l'une des revendications 13 ou 14, **caractérisé en ce que** ledit composant optique forme un premier composant optique (600A), et **en ce que** le système optique comporte en outre :
- un second composant optique (600B) selon l'une quelconque des revendications 1 à 11, avec le premier composant optique et le second composant optique qui sont espacés l'un de l'autre et qui ont leurs faces de sortie respectives (613A, 613B) situées face à face ; et
- un séparateur optique (682) et deux bras de guidage (683A, 683B), avec le séparateur optique configuré pour répartir la lumière sur chacun des deux bras de guidage, avec l'un premier des bras de guidage qui est apte à guider la lumière depuis le séparateur optique jusqu'au premier composant optique (600A) et avec l'un second des bras de guidage qui est apte à guider la lumière depuis le séparateur optique jusqu'au second composant optique (600B) ;
et dans lequel les premier et second composants optiques (600A; 600B) sont configurés et positionnés de manière symétrique de sorte que, lorsqu'un échantillon (30) destiné à être analysé est disposé sur la face (112) configurée pour former l'interface d'échange du premier composant optique (600A) et qu'un échantillon de référence (30') est disposé sur la face (112) configurée pour former l'interface d'échange du deuxième composant optique (600B), la lumière émergeant de la face de sortie (613A) du premier composant optique (600A) et la lumière émergeant de la face de sortie (613B) du deuxième composant optique (600B) puissent interférer et former une figure d'interférence pour chaque longueur d'onde dans l'espace entre les deux composants optiques de manière à pouvoir être détectée par le détecteur matriciel (50").

## Patentansprüche

1. Optische Komponente (100; 500; 600A; 600B) für eine Vorrichtung zur multispektralen Bildgebung durch abgeschwächte Totalreflexion, **dadurch gekennzeichnet, dass** sie ein Trägersubstrat (110; 510) und mindestens zwei planare Wellenleiter (120₁, 120₂, 120₃; 520₁, 520₂, 520₃) umfasst, und dadurch, dass:
- jeder der planaren Wellenleiter (120₁, 120₂, 120₃; 520₁, 520₂, 520₃) sich in einer jeweiligen Ebene erstreckt, wobei die jeweiligen Ebenen parallel zueinander und parallel zu einer Ebene der optischen Komponente sind;
- die planaren Wellenleiter (120₁, 120₂, 120₃; 520₁, 520₂, 520₃) und das Trägersubstrat (110; 510) entlang einer Achse orthogonal zur Ebene der optischen Komponente miteinander überlagert sind, wobei das Trägersubstrat die planaren Wellenleiter bedeckt;
- jeder der planaren Wellenleiter mindestens ein Beugungsgitter (130₁, 130₂, 130₃) umfasst, um Licht aus dem planaren Wellenleiter zu extrahieren;
- mindestens zwei der planaren Wellenleiter ihre jeweiligen Beugungsgitter (130₁, 130₂, 130₃) aufweisen, die voneinander unterschiedliche Werte des mittleren Verteilungsabstands der Muster aufweisen;
- das Trägersubstrat (110; 510) auf einer den planaren Wellenleitern (120₁, 120₂, 120₃; 520₁, 520₂, 520₃) gegenüberliegenden Seite eine Fläche (112) umfasst, die so konfiguriert ist, dass sie eine Grenzfläche zum Austausch mit einer Probe (30, 30') bildet und dass sie auf das aus den planaren Wellenleitern (120₁, 120₂, 120₃; 520₁, 520₂, 520₃) extrahierte Licht fällt; und
- eine Austrittsfläche (113; 513; 613A; 613B) der optischen Komponente (100; 500; 600A; 600B) einer Seitenfläche des Trägersubstrats (110; 510) entspricht, die so eingerichtet ist, dass das aus den planaren Wellenleitern (120₁, 120₂, 120₃; 520₁, 520₂, 520₃) extrahierte und durch Totalreflexion im Trägersubstrat (110; 510) reflektierte Licht im Bereich der Fläche (112), die so konfiguriert ist, dass sie die Austauschgrenzfläche bildet, durch diese Austrittsfläche (113; 513; 613A; 613B) aus der optischen Komponente (100; 500; 600A; 600B) austritt.

2. Optische Komponente (100; 500; 600A; 600B) nach Anspruch 1, **dadurch gekennzeichnet, dass** jeder der planaren Wellenleiter (120₁, 120₂, 120₃; 520₁, 520₂, 520₃) eine Kernschicht (121₁, 121₂, 121₃) umfasst, die zwischen zwei Hüllschichten (122₁, 122₂, 122₃) eingefügt ist, und dadurch, dass in jedem der planaren Wellenleiter das mindestens eine Beugungsgitter (130₁; 130₂; 130₃) aus Abschnitten mit hohem Index und Abschnitten mit niedrigem Index besteht, wobei die Abschnitte mit hohem Index aus dem Material der Kernschicht bestehen, und die Abschnitte mit niedrigem Index aus dem Material der Hüllschichten bestehen.

3. Optische Komponente (100; 500; 600A; 600B) nach Anspruch 2, **dadurch gekennzeichnet, dass** in jedem der planaren Wellenleiter das mindestens eine Beugungsgitter (130₁; 130₂; 130₃) einen lokalen Wert des Füllfaktors aufweist, der monoton entlang einer Ausbreitungsachse des Lichts in dem planaren Wellenleiter und in der Ausbreitungsrichtung des Lichts entlang dieser Achse variiert, wobei sich der lokale Wert des Füllfaktors damit allmählich dem Wert 0,5 annähert, wobei der Füllfaktor ein Verhältnis zwischen einem Flächeninhalt, der von dem Abschnitt mit niedrigem Index in einem Muster des Beugungsgitters eingenommen wird, und einem Gesamtflächeninhalt, der von dem Muster eingenommen wird, bezeichnet, wobei die Flächeninhalte in einer Schnittebene parallel zur Ebene der optischen Komponente definiert sind.

4. Optische Komponente (100; 500; 600A; 600B) nach einem der Ansprüche 1 bis 3, **dadurch gekennzeichnet, dass** die planaren Wellenleiter (120₁, 120₂, 120₃; 520₁, 520₂, 520₃) in absteigender Reihenfolge eines zugeordneten Extraktionswellenlängenwerts eingerichtet sind, wobei der Extraktionswellenlängenwert mit abnehmendem Abstand zwischen dem planaren Wellenleiter und dem Trägersubstrat (110; 510) abnimmt.

5. Optische Komponente (100; 500; 600A; 600B) nach einem der Ansprüche 1 bis 4, **dadurch gekennzeichnet, dass** das Trägersubstrat (110; 510) bei Werten der Extraktionswellenlänge, die den Beugungsgittern (130₁; 130₂; 130₃) jedes der planaren Wellenleiter zugeordnet sind, transparent ist.

6. Optische Komponente (100; 500; 600A; 600B) nach einem der Ansprüche 1 bis 5, **dadurch gekennzeichnet, dass** ein Brechungsindex des Trägersubstrats (110; 510) bei einer maximalen Wellenlänge der Extraktionswellenlängen, die den Beugungsgittern (130₁; 130₂; 130₃) jedes der planaren Wellenleiter zugeordnet sind, größer oder gleich 3 ist.

7. Optische Komponente (100; 500; 600A; 600B) nach einem der Ansprüche 1 bis 6, **dadurch gekennzeichnet, dass** die Austrittsfläche (113; 513; 613A; 613B) relativ zur Ebene der optischen Komponente quer ausgerichtet ist.

8. Optische Komponente (100; 500; 600A; 600B) nach einem der Ansprüche 1 bis 7, **dadurch gekennzeichnet, dass** in jedem der Beugungsgitter (130₁; 130₂; 130₃) der Wert des mittleren Verteilungsabstands der Muster so angepasst ist, dass ein Lichtstrahl bei einem bestimmten Extraktionswellenlängenwert und in einem Extraktionswinkel, der relativ zur Normalen zur Ebene der optischen Komponente definiert ist, extrahiert wird, wobei der Wert des Extraktionswinkels bei allen Beugungsgittern gleich ist und wobei der Wert des durch die Brechung beim Eintritt in das Trägersubstrat modifizierten Extraktionswinkels größer ist als ein kritischer Winkel der internen Totalreflexion an einer Grenzfläche zwischen dem Trägersubstrat und einem äußeren Medium.

9. Optische Komponente (100; 500; 600A; 600B) nach Anspruch 8, **dadurch gekennzeichnet, dass** der Wert des durch die Brechung beim Eintritt in das Trägersubstrat modifizierten Extraktionswinkels größer oder gleich 45° ist.

10. Optische Komponente (100; 500; 600A; 600B) nach Anspruch 8 oder 9, **dadurch gekennzeichnet, dass** die Austrittsfläche (113; 513; 613A; 613B) relativ zur Ebene der optischen Komponente quer ausgerichtet ist, wobei ein Winkel (β) zwischen der Ebene der optischen Komponente und der Austrittsfläche im Wesentlichen bis auf plus oder minus 5° gleich dem Wert des durch die Brechung beim Eintritt in das Trägersubstrat modifizierten Extraktionswinkels ist.

11. Optische Komponente (500) nach einem der Ansprüche 1 bis 10, **dadurch gekennzeichnet, dass** sie weiter eine Strahlteilerschicht (570) umfasst, die dem Trägersubstrat (510) auf der den planaren Wellenleitern gegenüberliegenden Seite überlagert ist, für Extraktionswellenlängenwerte, die den Beugungsgittern jedes der planaren Wellenleiter zugeordnet sind, transparent ist, und einen Brechungsindex aufweist, der sich von dem des Trägersubstrats unterscheidet.

12. Optisches System (4000; 6000), **dadurch gekennzeichnet, dass** es eine optische Komponente (100; 600A) nach einem der Ansprüche 1 bis 11 sowie eine Vielzahl von elementaren Lichtquellen (41, 42, 43) umfasst, wobei jede elementare Lichtquelle optisch mit einem jeweiligen der planaren Wellenleiter gekoppelt und in der Lage ist, einen monochromatischem Lichtstrahl mit einem Spektrum zu emittieren, das auf einen dem planaren Wellenleiter zugeordneten Extraktionswellenlängenwert zentriert ist.

13. Optisches System (4000; 6000) nach Anspruch 12, **dadurch gekennzeichnet, dass** es weiter einen Matrixdetektor (50; 50") umfasst, der für Extraktionswellenlängenwerte empfindlich ist, die den verschiedenen planaren Wellenleitern zugeordnet sind, und so konfiguriert ist, dass er Licht empfängt, das aus dem Trägersubstrat austritt, nachdem es von den elementaren Lichtquellen emittiert wurde und in der optischen Komponente zirkuliert ist.

14. Optisches System nach Anspruch 13, **dadurch gekennzeichnet, dass** es weiter einen Rechner umfasst, der so konfiguriert ist, dass er am Eingang Lichtstärkemessungen empfängt, die von dem Matrixdetektor bereitgestellt werden, und dass er am Ausgang ein multispektrales Bild einer Probe bereitstellt.

15. Optisches System (6000) nach einem der Ansprüche 13 oder 14, **dadurch gekennzeichnet, dass** die optische Komponente eine erste optische Komponente (600A) bildet, und dadurch, dass das optische System weiter umfasst:
- eine zweite optische Komponente (600B) nach einem der Ansprüche 1 bis 11, wobei die erste optische Komponente und die zweite optische Komponente voneinander beabstandet sind und ihre jeweiligen Austrittsflächen (613A, 613B) einander gegenüberliegend aufweisen; und
- einen optischen Teiler (682) und zwei Leitarme (683A, 683B), wobei der optische Teiler so konfiguriert ist, dass er das Licht auf jeden der zwei Leitarme verteilt, wobei ein erster der Leitarme in der Lage ist, das Licht vom optischen Teiler bis zur ersten optischen Komponente (600A) zu leiten, und wobei ein zweiter der Leitarme in der Lage ist, das Licht vom optischen Teiler bis zur zweiten optischen Komponente (600B) zu leiten;
und wobei die erste und die zweite optische Komponente (600A; 600B) so konfiguriert und symmetrisch positioniert sind, dass, wenn eine Probe (30), die analysiert werden soll, auf der Fläche (112) angeordnet wird, die so konfiguriert ist, dass sie die Austauschgrenzfläche der ersten optischen Komponente (600A) bildet, und eine Referenzprobe (30') auf der Fläche (112) angeordnet wird, die so konfiguriert ist, dass sie die Austauschgrenzfläche der zweiten optischen Komponente (600B) bildet, das aus der Austrittsfläche (613A) der ersten optischen Komponente (600A) austretende Licht und das aus der Austrittsfläche (613B) der zweiten optischen Komponente (600B) austretende Licht interferieren und ein Interferenzmuster für jede Wellenlänge in dem Raum zwischen den zwei optischen Komponenten bilden können, sodass es von dem Matrixdetektor (50") detektiert werden kann.

## Claims

1. Optical component (100; 500; 600A; 600B) for an attenuated total reflection multispectral imaging device, **characterised in that** it comprises a support substrate (110; 510) and at least two planar waveguides (120₁, 120₂, 120₃; 520₁, 520₂, 520₃), and **in that**:
- each of the planar waveguides (120₁, 120₂, 120₃; 520₁, 520₂, 520₃) extends in a respective plane, with said respective planes parallel to each other and parallel to a plane of the optical component;
- the planar waveguides (120₁, 120₂, 120₃; 520₁, 520₂, 520₃) and the support substrate (110; 510) are superimposed together along an axis orthogonal to the plane of the optical component, with the support substrate which covers the planar waveguides;
- each of the planar waveguides comprises at least one diffraction grating (130₁, 130₂, 130₃), to extract light out of said planar waveguide;
- at least two of the planar waveguides have their respective diffraction gratings (130₁, 130₂, 130₃) which have values of the average pattern distribution pitch which are distinct from each other;
- the support substrate (110; 510) comprises, on one side opposite the planar waveguides (120₁, 120₂, 120₃; 520₁, 520₂, 520₃), a face (112) configured to form an exchange interface with a sample (30, 30') and to be incident to the light extracted from the planar waveguides (120₁, 120₂, 120₃; 520₁, 520₂, 520₃); and
- an exit face (113; 513; 613A; 613B) of the optical component (100; 500; 600A; 600B) corresponds to a lateral face of the support substrate (110; 510) arranged so that the light extracted from the planar waveguides (120₁, 120₂, 120₃; 520₁, 520₂, 520₃) and reflected by total reflection in the support substrate (110; 510) at the face (112) configured to form the exchange interface emerges from the optical component (100; 500; 600A; 600B) through this exit face (113; 513; 613A; 613B).

2. Optical component (100; 500; 600A; 600B) according to claim 1, **characterised in that** each of the planar waveguides (120₁, 120₂, 120₃; 520₁, 520₂, 520₃) comprises a core layer (121₁, 121₂, 121₃) interposed between two cladding layers (122₁, 122₂, 122₃), and **in that** in each of the planar waveguides, the at least one diffraction grating (130₁, 130₂, 130₃) consists of high-index portions and low-index portions, with the high-index portions made of the material of the core layer and the low-index portions made of the material of the cladding layers.

3. Optical component (100; 500; 600A; 600B) according to claim 2, **characterised in that** in each of the planar waveguides, the at least one diffraction grating (130₁, 130₂, 130₃) has a local value of the fill factor which varies monotonically along an axis of propagation of the light in said planar waveguide and in the direction of propagation of the light along this axis, the local value of the fill factor thus progressively approaching the value 0.5, with the fill factor which refers to a ratio between a surface area occupied by the low-index portion in a pattern of the diffraction grating and a total surface area occupied by said pattern, said surfaces being defined in a sectional plane parallel to the plane of the optical component.

4. Optical component (100; 500; 600A; 600B) according to any one of claims 1 to 3, **characterised in that** the planar waveguides (120₁, 120₂, 120₃; 520₁, 520₂, 520₃) are arranged in a decreasing order of an associated extraction wavelength value, with the extraction wavelength value which decreases at the same time as the distance between the planar waveguide and the support substrate (110; 510) decreases.

5. Optical component (100; 500; 600A; 600B) according to any one of claims 1 to 4, **characterised in that** the support substrate (110; 510) is transparent to values of the extraction wavelength associated with the diffraction gratings (130₁, 130₂, 130₃) of each of the planar waveguides.

6. Optical component (100; 500; 600A; 600B) according to any one of claims 1 to 5, **characterised in that** a refractive index of the support substrate (110; 510) is greater than or equal to 3, at a maximum wavelength amongst extraction wavelengths associated with the diffraction gratings (130₁, 130₂, 130₃) of each of the planar waveguides.

7. Optical component (100; 500; 600A; 600B) according to any one of claims 1 to 6, **characterised in that** the exit face (113; 513; 613A; 613B) is oriented transversely with respect to the plane of the optical component.

8. Optical component (100; 500; 600A; 600B) according to any one of claims 1 to 7, **characterised in that** in each of the diffraction gratings (130₁, 130₂, 130₃), the value of the average pattern distribution pitch is adapted to extract a light beam at a determined value of extraction wavelength, and according to an extraction angle defined with respect to the normal to the plane of the optical component, with the same value of the extraction angle for all diffraction gratings and with said value of the extraction angle, modified by the refraction at the input into the support substrate, which is greater than a critical angle of total internal reflection at an interface between the support substrate and an external medium.

9. Optical component (100; 500; 600A; 600B) according to claim 8, **characterised in that** said value of the extraction angle, modified by the refraction at the input into the support substrate, is greater than or equal to 45°.

10. Optical component (100; 500; 600A; 600B) according to claim 8 or 9, **characterised in that** the exit face (113; 513; 613A; 613B) is oriented transversely with respect to the plane of the optical component, with an angle (β) between the plane of the optical component and said exit face, which is substantially equal to the value of the extraction angle modified by refraction at the input into the support substrate, to within plus or minus 5°.

11. Optical component (500) according to any one of claims 1 to 10, **characterised in that** it further comprises a beam splitting layer (570), superimposed on the support substrate (510) on the side opposite to the planar waveguides, transparent to extraction wavelength values associated with the diffraction gratings of each of the planar waveguides, and with a refractive index distinct from that of the support substrate.

12. Optical system (4000; 6000) **characterised in that** it comprises an optical component (100; 600A) according to any one of claims 1 to 11, as well as a plurality of elementary light sources (41, 42, 43), where each elementary light source is optically coupled to a respective one of the planar waveguides and able to emit a monochromatic light beam with a spectrum centred on an extraction wavelength value associated with said planar waveguide.

13. Optical system (4000; 6000) according to claim 12, **characterised in that** it further comprises a matrix detector (50; 50"), sensitive to extraction wavelength values associated with the different planar waveguides, and configured to receive light emerging from the support substrate after it has been emitted by the elementary light sources and has circulated in the optical component.

14. Optical system according to claim 13, **characterised in that** it further comprises a computer, configured to receive as input light intensity measurements provided by the matrix detector, and to output a multispectral image of a sample.

15. Optical system (6000) according to one of claims 13 or 14, **characterised in that** said optical component forms a first optical component (600A), and **in that** the optical system further comprises:
- a second optical component (600B) according to any one of claims 1 to 11, with the first optical component and the second optical component which are spaced apart from each other and which have their respective exit faces (613A; 613B) facing each other; and
- an optical splitter (682) and two guide arms (683A, 683B), with the optical splitter configured to split the light on each of the two guide arms, with a first one of the guide arms which is able to guide the light from the optical splitter up to the first optical component (600A) and with a second one of the guide arms which is able to guide the light from the optical splitter up to the second optical component (600B);
and wherein the first and second optical components (600A; 600B) are configured and positioned symmetrically such that, when a sample (30) intended to be analysed is placed over the face (112) configured to form the exchange interface of the first optical component (600A) and that a reference sample (30') is placed over the face (112) configured to form the exchange interface of the second optical component (600B), the light coming out from the exit face (613A) of the first optical component (600A) and the light coming out from the exit face (613B) of the second optical component (600B) could interfere and form an interference pattern for each wavelength in the space between the two optical components so as to be able to be detected by the matrix detector (50").
